# EUROPÄISCHE PATENTANMELDUNG

(11) **EP 2 479 540 A1**
(43) Veröffentlichungstag der Anmeldung: **25.07.2012**
(21) Anmeldenummer: 11000575.8
(22) Anmeldetag: 25.01.2011
(51) Int. Cl.: G01D 21/02, G01F 23/04, G01L 19/00

(54) **Stabsensor**

(71) Anmelder: Carl Freudenberg KG, 69469 Weinheim (DE)
(72) Erfinder: Herweck, Tim, 68623 Lampertheim (DE)

(57) **Zusammenfassung**

Stabsensor, umfassend zumindest zwei Sensoren (1,2), die in einer Einheit (3) zusammengefasst sind, wobei einer der Sensoren (1, 2) als Drucksensor (1) zur Erfassung des Kurbelgehäusedrucks einer Verbrennungskraftmaschine ausgebildet ist.

## Beschreibung

### Technisches Gebiet

Die Erfindung betrifft einen Stabsensor.

Stabsensoren sind allgemein bekannt und gelangen beisplelsweise als Ölmessstab für Verbrennungskraftmaschinen zur Anwendung, wobei der Stabsensor einen Temperatursensor zur Erfassung der Öftemperatur der Verbrennungskraftmaschine umfasst.

### Stand der Technik

Zusätzlich zur Öltemperatur sollen in modernen Kraftfahrzeugen noch andere Parameter der Verbrennungskraftmaschine erfasst werden, wie z. B. der Ölstand, der Öldruck und/oder die Ölgüte. Die Sensoren zur Erfassung dieser Parameter werden an unterschiedlichen Stellen am Motor verbaut, wobei für jeden der genannten Sensoren eine Durchbrechung ins Innere der Verbrennungskraftmaschine vorgesehen sein muss. Neben dem fertigungstechnischen Aufwand zur Herstellung dieser Durchbrechungen ist von Nachteil, dass jede dieser Durchbrechungen zur Umgebung hin abgedichtet werden muss. Im Hinblick auf eine möglichst geringe Störanfälligkeit ist eine solche Vielzahl von Durchbrechungen zur Montage unterschiedlicher Sensoren wenig zufriedenstellend.

### Darstellung der Erfindung

Der Erfindung liegt die Aufgabe zugrunde, einen Stabsensor der vorbekannten Art derart weiterzuentwickeln, dass durch diesen zumindest zwei Parameter erfasst werden können und dass dadurch eine Verbrennungskraftmaschine, in der der Stabsensor zur Anwendung gelangen soll, einfacher und kostengünstiger herstellbar ist.

Diese Aufgabe wird erfindungsgemäß durch einen Stabsensor gemäß Anspruch 1 gelöst. Auf vorteilhafte Ausgestaltungen nehmen die auf Anspruch 1 rückbezogenen Ansprüche Bezug.

Zur Lösung der Aufgabe ist ein Stabsensor vorgesehen, umfassend zumindest zwei Sensoren, die in einer Einheit zusammengefasst sind, wobei einer der Sensoren als Drucksensor zur Erfassung des Kurbelgehäusedrucks einer Verbrennungskraftmaschine ausgebildet ist. Durch die Zusammenfassung der zumindest zwei Sensoren in der Einheit können zumindest zwei Parameter erfasst werden. Durch die Zusammenfassung in der Einheit ist nur eine Durchbrechung in der Verbrennungskraftmaschine ausreichend, durch die der Stabsensor von außen ins Innere ragt. Die nur eine Ausnehmung ist in fertigungstechnischer Hinsicht einfach und in wirtschaftlicher Hinsicht kostengünstig herstellbar. Auch die Abdichtung der nur einen Durchbrechung ist einfach und zuverlässig.

Die Erfassung des Kurbelgehäusedrucks ist besonders wichtig, weil der Kurbelgehäusedruck ein Maß für den aktuellen Zustand der Verbrennungskraftmaschine ist. Ein erhöhter Druck im Kurbelgehäuse deutet auf Verbrennungsgase hin, die an den Kolbenringen vorbei In das Kurbelgehäuse gelangt sind. Ein erhöhter Druck im Kurbelgehäuse kann ein Hinweis dafür sein, dass die Verbrennungskraftmaschine einen Fehler oder einen über die Lebensdauer erhöhten Verschleiß, z. B. der Kolbenringe, aufweist.

Die Erfassung eines erhöhten Drucks im Kurbelgehäuse ist für stark beanspruchte Verbrennungskraftmaschinen, die häufig teuer und/oder schlecht zugänglich sind, auch deshalb wichtig, um teuere Ausfallzeiten zu vermelden. Die Erfassung des Drucks im Kurbelgehäuse von Verbrennungskraftmaschinen ist deshalb besonders sinnvoll bei Baumaschinen, im Schiffsbau, in Nutzfahrzeugen, wenn die Verbrennungskraftmaschine als Rennmotor zur Anwendung gelangt oder als Hochleistungs-Diesel-Notstromaggregat.

Die Sensoren können durch jeweils einen Sensor zur Erfassung von Kurbelgehäusedruck und Ölstand, Öltemperatur, Öldruck und/oder Ölgüte gebildet sein. Im Stand der Technik waren die genannten Sensoren jeweils als Einzelteile ausgebildet und als solche jeweils separat an der Verbrennungskraftmaschine verbaut. Durch die Zusammenfassung der Sensoren in der Einheit sind für den erfindungsgemäßen Stabsensor lediglich eine Bohrung und eine Abdichtung in der Verbrennungskraftmaschine erforderlich, statt wie bisher eine Vielzahl von Bohrungen und Abdichtungen. Auch die Montage ist dadurch wesentlich vereinfacht.

Der Sensor zur Erfassung des Ölstandes, der Öltemperatur, des Öldrucks und/oder der Ölgüte kann stirnseitig einerseits angeordnet sein. Eine solche Anordnung ist sinnvoll, weil die genannten Sensoren mit dem Medium in Verbindung sein müssen, dessen Parameter erfasst werden sollen. Die Durchbrechung in der Verbrennungskraftmaschine kann durch eine solche Ausgestaltung deutlich oberhalb des Ölsumpfes angeordnet sein, was im Hinblick auf eine einfache und zuverlässige Abdichtung des Stabsensors in der Durchbrechung der Verbrennungskraftmaschine von hervorzuhebendem Vorteil ist. Die mit dem Sensor bestückte Stirnseite des Stabsensors ragt demgegenüber in den Ölsumpf, um die genannten Parameter zu erfassen.

Stirnseitig andererseits können Anschlüsse für eine signalleitende Verbindung mit einer Auswerteeinheit angeordnet sein. Die Auswerteeinheit kann beispielsweise durch eine Motorsteuerung mit einem Kennfeld gebildet sein, wobei die Soll-Werte der erfassten Parameter mit Ist-Werten verglichen werden. Bei Überschreitung einer vorgegebenen Toleranz vom jeweiligen SollWert kann diese unerwünscht große Abweichung optisch und/oder akustisch angezeigt werden, so dass der Betreiber der Verbrennungskraftmaschine darauf entsprechend reagieren kann.

Die Einheit kann durch ein stabförmiges Gehäuse gebildet sein, in dem die Sensoren angeordnet sind. Stabförmige Gehäuse zur Unterbringung mehrerer Sensoren sind einfach und kostengünstig herstellbar und lassen sich mit geringem Aufwand an der Verbrennungskraftmaschine verbauen.

Außerdem betrifft die Erfindung eine Verbrennungskraftmaschine, umfassend einen Motorblock mit einem Kurbelgehäuse und eine Ölwanne, sowie einen Stabsensor, wie zuvor beschrieben. Der Stabsensor durchdringt das Kurbelgehäuse an einer Stelle von außen nach innen. Die Herstellung einer solchen Verbrennungskraftmaschine ist dadurch wesentlich vereinfacht, dass das Gehäuse der Verbrennungskraftmaschine, trotz der Anbringung mehrerer Sensoren, die relevante Parameter der Verbrennungskraftmaschine erfassen, an nur einer Stelle zur Montage des Stabsensors durchdrungen sein muss.

Der Sensor zur Erfassung des Ölstands, der Öltemperatur, des Öldrucks und/oder der Ölgüte ist bevorzugt im Ölsumpf der Ölwanne angeordnet.

### Kurzbeschreibung der Zeichnung

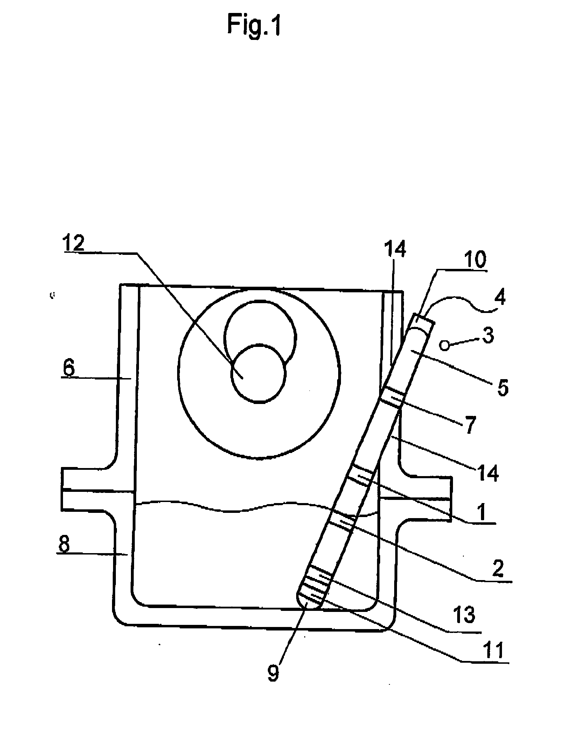

Ein Ausführungsbeispiel des erfindungsgemäßen Stabsensors und der erfindungsgemäßen Verbrennungskraftmaschine ist in Fig. 1 gezeigt und wird nachfolgend näher beschrieben.

### Ausführung der Erfindung

Fig. 1 zeigt in schematischer Darstellung eine Verbrennungskraftmaschine, die einen Motorblock 6, ein Kurbelgehäuse 12 mit Kurbeitrieb und eine Ölwanne 8 umfasst.

In der Ölwanne 8 befindet sich ein Ölsumpf, wobei die erste Stirnseite 9 des Stabsensors vom Öl im Ölsumpf vollständig umschlossen ist.

Die zweite Stirnseite 10 des Stabsensors weist die Anschlüsse 4 für eine hier nicht dargestellte Auswerteeinheit auf, mit der der Stabsensor signalleitend verbunden ist.

Im hier dargestellten Ausführungsbeispiel umfasst der Stabsensor mehrere Sensoren, wobei der Sensor 1 als Drucksensor zur Erfassung des Kurbelgehäusedrucks ausgebildet ist. Der Sensor 2 ist zur Erfassung des Ölstands vorgesehen, der Sensor 11 zur Erfassung der Öltemperatur, der Sensor 7 zur Erfassung des Öldrucks und der Sensor 13 zur Erfassung der Ölgüte.

Alle genannten Sensoren 1, 2, 11, 7, 13 sind in der Einheit 3 zusammengefasst, die durch das stabförmige Gehäuse 5 gebildet ist.

Die Verbrennungskraftmaschine weist zur Erfassung der Parameter Kurbelgehäusedruck, Ölstand, Öltemperatur, Öldruck und Ölgüte im Kurbelgehäuse 12 nur eine Durchbrechung 14 auf, in der der Stabsensor angeordnet ist.

Obwohl alle die zuvor genannten Parameter durch den Stabsensor erfasst werden können, ist nur die eine Durchbrechung 14 zwischen dem Kurbelgehäuse 12 und dem Stabsensor gegenüber der Umgebung abzudichten; eine Vielzahl von Parametern kann dadurch sehr einfach und kostengünstig erfasst werden.

## Patentansprüche

1. Stabsensor, umfassend zumindest zwei Sensoren (1,2), die in einer Einheit (3) zusammengefasst sind, wobei einer der Sensoren (1,2) als Drucksensor (1) zur Erfassung des Kurbelgehäusedrucks einer Verbrennungskraftmaschine ausgebildet ist,

2. Stabsensor nach Anspruch 1, **dadurch gekennzeichnet, dass** die Sensoren (1, 2, 11, 7,13) durch jeweils einen Sensor zur Erfassung von Kurbelgehäusedruck und Ölstand, Öltemperatur, Öldruck und/oder Ölgüte gebildet sind.

3. Stabsensor nach einem der Ansprüche 1 oder 2, **dadurch gekennzeichnet, dass** der Sensor (2,11,7,13) zur Erfassung des Ölstands, der Öltemperatur, des Öldrucks und/oder der Ölgüte stirnseitig einerseits angeordnet ist.

4. Stabsensor nach einem der Ansprüche 1 bis 3, **dadurch gekennzeichnet, dass** stirnseitig andererseits Anschlüsse (4) für eine signalleitende Verbindung mit einer Auswerteteeinheit angeordnet sind.

5. Stabsensor nach einem der Ansprüche 1 bis 4, **dadurch gekennzeichnet, dass** die Einheit (3) durch ein stabförmiges Gehäuse (5) gebildet ist, in dem die Sensoren (1, 2) angeordnet sind.

6. Verbrennungskraftmaschine, umfassend einen Motorblock (6) mit einem Kurbelgehäuse (12) und eine Ölwanne (8) sowie einen Stabsensor nach einem der Ansprüche 1 bis 5, wobei der Stabsensor das Kurbelgehäuse (12) an nur einer Stelle von außen nach innen durchdringt.

7. Verbrennungskraftmaschine nach Anspruch 6, **dadurch gekennzeichnet, dass** der Sensor (2, 11, 7,13) zur Erfassung des Ölstands, der Öltemperatur, des Öldrucks und/oder der Ölgüte im Ölsumpf der Ölwanne (8) angeordnet ist.
